# EUROPÄISCHE PATENTSCHRIFT

(11) **EP 2 158 244 B1**
(45) Veröffentlichungstag und Bekanntmachung des Hinweises auf die Patenterteilung: **13.10.2010**
(21) Anmeldenummer: 08759662.3
(22) Anmeldetag: 16.05.2008
(51) Int. Cl.: C08G 18/32, C08G 18/76, C08G 101/00

(54) **XEROGELE AUF BASIS VON AROMATISCHEM POLYHARNSTOFF**
XEROGELS MADE FROM AROMATIC POLYUREAS
XEROGELS À BASE DE POLYURÉE AROMATIQUE

(30) Priorität: 16.05.2007 EP 07108306
(43) Veröffentlichungstag der Anmeldung: 03.03.2010
(73) Patentinhaber: BASF SE, 67056 Ludwigshafen (DE)
(72) Erfinder: SCHÄDLER, Volker, Ann Arbor, MI 48104 (US); FRICKE, Marc, 49080 Osnabrück (DE); WIEGMANN, Werner, 32369 Rahden-Wehe (DE); EMGE, Andreas, 49448 Lemförde (DE); RAMAN, Vijay Immanuel, 68163 Mannheim (DE); SANCHEZ-FERRER, Antonio, E-08015 Barcelona (ES)
(86) Internationale Anmeldenummer: PCT/EP2008/056015
(87) Internationale Veröffentlichungsnummer: WO 2008/138978

(56) Entgegenhaltungen:
- WO-A-98/44013
- US-A- 6 063 826
- JU-YOUNG KIM ET AL: "SWELLING BEHAVIOR OF NOVEL POLYURETHANE HYDRO-XEROGELS" POLYMER BULLETIN, SPRINGER, HEIDELBERG, DE, Bd. 36, Nr. 6, 1. Juni 1996 (1996-06-01), Seiten 737-744, XP000588751 ISSN: 0170-0839

## Beschreibung

Die Erfindung betrifft ein Xerogel enthaltend
- von 30 bis 90 Gew.-% einer Monomerkomponente (a1) aus mindestens einem mehrfunktionellen Isocyanat und
- von 10 bis 70 Gew.-% einer Monomerkomponente (a2) aus mindestens einem mehrfunktionellen aromatischen Amin, wovon mindestens eines ausgewählt ist aus 4,4'-Diaminodiphenylmethan, 2,4'-Diaminodiphenylmethan, 2,2'-Diaminodiphenylmethan und oligomerem Diaminodiphenylmethan,
wobei die Summe der Gew.-% der Monomerkomponenten (a1) und (a2) 100 Gew.-% ergibt und wobei die Monomerkomponenten im Xerogel in polymerer Form vorliegen und der volumengewichtete mittlere Porendurchmesser des Xerogels höchstens 5 µm beträgt.

Weiterhin betrifft die Erfindung ein Verfahren zur Herstellung von Xerogelen, die so erhältlichen Xerogele sowie die Verwendung der Xerogele als Dämmstoff und in Vakuumisolationspaneelen.

Poröse Materialien, beispielsweise Polymerschäume, mit Poren im Größenbereich von deutlich unter 1 µm und einer hohen Porosität von mindestens 70 % sind aufgrund theoretischer Überlegungen besonders gute Wärmeisolatoren.

Solche porösen Materialien mit kleinem mittleren Porendurchmesser können beispielsweise als organische Xerogele vorliegen. In der Literatur wird der Begriff Xerogel nicht durchweg einheitlich verwendet. Im Allgemeinen wird unter einem Xerogel ein poröses Material verstanden, welches durch ein Sol-Gel-Verfahren hergestellt wurde, wobei die flüssige Phase durch Trocknung unterhalb der kritischen Temperatur und unterhalb des kritischen Drucks der flüssigen Phase ("subkritische Bedingungen") aus dem Gel entfernt wurde. Im Gegensatz hierzu spricht man im Allgemeinen von Aerogelen, wenn die Entfernung der flüssigen Phase aus dem Gel unter überkritischen Bedingungen durchgeführt wurde.

Beim Sol-Gel-Verfahren wird zunächst ein Sol auf Basis einer reaktiven organischen Gelvorstufe hergestellt und danach das Sol durch eine vernetzende Reaktion zu einem Gel geliert. Um aus dem Gel ein poröses Material, beispielsweise ein Xerogel, zu erhalten, muss die Flüssigkeit entfernt werden. Dieser Schritt wird nachfolgend vereinfachend als Trocknung bezeichnet.

Die WO-95/02009 offenbart Isocyanat-basierte Xerogele, die insbesondere für Anwendungen im Bereich der Vakuumisolation geeignet sind. Die Publikationsschrift offenbart zudem ein Sol-Gel-basiertes Verfahren zur Herstellung der Xerogele, wobei bekannte, unter anderem aromatische Polyisocyanate sowie ein unreaktives Lösungsmittel zum Einsatz kommen. Als weitere Verbindungen mit aktiven H-Atomen werden aliphatische und aromatische Polyamine oder Polyole eingesetzt. Die in der Publikationsschrift offenbarten Beispiele umfassen solche, in denen ein Polyisocyanat mit Diaminodiethyltoluol umgesetzt wird. Die offenbarten Xerogele weisen generell mittlere Porengrößen im Bereich von 50 µm auf. In einem Beispiel wird ein mittlerer Porendurchmesser von 10 µm genannt.

Die thermische Leitfähigkeit der offenbarten Xerogele ist jedoch nicht für alle Anwendungen ausreichend. Für Anwendungen im Bereich von Drücken oberhalb des Vakuumbereiches, insbesondere im Druckbereich von ungefähr 1 bis ungefähr 100 mbar, ist die thermische Leitfähigkeit im Allgemeinen unbefriedigend hoch. Zudem sind die Materialeigenschaften, insbesondere die mechanische Stabilität des Xerogels und die Porosität, nicht für alle Anwendungen ausreichend.

Es bestand daher die Aufgabe, ein poröses Material zur Verfügung zu stellen, das eine geringe thermische Leitfähigkeit aufweist. Darüber hinaus sollten die Xerogele auch bei Drücken oberhalb des Vakuumbereiches, insbesondere in einem Druckbereich von ungefähr 1 mbar bis ungefähr 100 mbar eine geringe thermische Leitfähigkeit aufweisen. Dies ist wünschenswert, da in Vakuumpaneelen im Laufe der Zeit eine Druckzunahme erfolgt. Zudem sollte das poröse Material eine hohe Porosität und eine ausreichend hohe mechanische Stabilität aufweisen. Darüber hinaus sollten die Xerogele eine geringe Entflammbarkeit und eine hohe Temperaturbeständigkeit aufweisen.

Eine weitere Aufgabe bestand darin, ein Verfahren zur Verfügung zu stellen, das ein Xerogel mit geringer Porengröße, hoher Porosität und hoher mechanischer Stabilität zugänglich macht. Zudem sollte das Verfahren zur Herstellung der Xerogele poröse Materialien mit einer geringen thermischen Leitfähigkeit insbesondere im Druckbereich von 1 bis 100 mbar zur Verfügung stellen.

Demgemäß wurden die erfindungsgemäßen Xerogele und ein Verfahren zur Herstellung von Xerogelen gefunden.

Bevorzugte Ausführungsformen sind den Ansprüchen und der Beschreibung zu entnehmen. Kombinationen bevorzugter Ausführungsformen verlassen nicht den Rahmen dieser Erfindung.

### Xerogel

Erfindungsgemäß enthält das Xerogel von 30 bis 90 Gew.-% einer Monomerkomponente (a1) aus mindestens einem mehrfunktionellen Isocyanat und von 10 bis 70 Gew.-% einer Monomerkomponente (a2) aus mindestens einem mehrfunktionellen aromatischen Amin, wovon mindestens eines ausgewählt ist aus 4,4'-Diaminodiphenylmethan, 2,4'- Diaminodiphenylmethan, 2,2'- Diaminodiphenylmethan und oligomerem Diaminodiphenylmethan. Die Monomerkomponenten (a1) und (a2) liegen im Xerogel in polymerer Form vor. Erfindungsgemäß beträgt der volumengewichtete mittlere Porendurchmesser des Xerogels höchstens 5 µm.

Bevorzugt enthält das Xerogel von 40 bis 80 Gew.-% der Monomerkomponente (a1) und von 20 bis 70 Gew.-% der Monomerkomponente (a2). Besonders bevorzugt enthält das Xerogel von 50 bis 70 Gew.-% der Monomerkomponente (a1) und von 30 bis 50 Gew.-% der Monomerkomponente (a2).

Unter einem Xerogel wird im Rahmen der vorliegenden Erfindung ein poröses Material mit einer Porosität von mindestens 70 Vol.-% und einer volumengemittelten mittleren Porengröße von höchstens 50 Mikrometer verstanden, welches durch ein Sol-Gel-Verfahren hergestellt wurde, wobei die flüssige Phase durch Trocknen unterhalb der kritischen Temperatur und unterhalb des kritischen Drucks der flüssigen Phase ("subkritische Bedingungen") aus dem Gel entfernt wurde.

Unter Funktionalität einer Verbindung soll im Rahmen der vorliegenden Erfindung die Zahl der reaktiven Gruppen pro Molekül verstanden werden. Im Fall der Monomerkomponente (a1) ist die Funktionalität die Anzahl der Isocyanatgruppen pro Molekül. Im Falle der Aminogruppen der Monomerkomponente (a2) bezeichnet die Funktionalität die Zahl der reaktiven Aminogruppen pro Molekül. Eine mehrfunktionelle Verbindung weist dabei eine Funktionalität von mindestens 2 auf.

Falls als Monomerkomponente (a1) oder (a2) Mischungen aus Verbindungen mit unterschiedlicher Funktionalität zum Einsatz kommen, ergibt sich die Funktionalität der Komponenten aus dem zahlengewichteten Mittel der Funktionalität der einzelnen Verbindungen. Eine mehrfunktionelle Verbindung enthält mindestens zwei der oben genannten funktionellen Gruppen pro Molekül.

Der mittlere Porendurchmesser wird mittels Quecksilber-Intrusionsmessung nach DIN 66133 bestimmt und ist im Rahmen der vorliegenden Erfindung grundsätzlich ein volumengewichteter Mittelwert. Die Quecksilber-Intrusionsmessung nach DIN 66133 ist eine porosimetrische Methode und wird in einem Porosimeter durchgeführt. Dabei wird Quecksilber in eine Probe des porösen Materials gepresst. Kleine Poren erfordern einen höheren Druck, um mit dem Quecksilber gefüllt zu werden als große Poren, und aus dem entsprechenden Druck/Volumen-Diagramm kann man eine Porengrößenverteilung und den volumengewichteten mittleren Porendurchmesser bestimmen.

Erfindungsgemäß beträgt der volumengewichtete mittlere Porendurchmesser des Xerogels höchstens 5 µm. Bevorzugt beträgt der volumengewichtete mittlere Porendurchmesser des Xerogels höchstens 3,5 µm, besonderes bevorzugt höchstens 3 µm und insbesondere höchstens 2,5 µm.

Zwar ist eine möglichst geringe Porengröße bei hoher Porosität aus Sicht einer geringen thermischen Leitfähigkeit wünschenswert. Herstellungsbedingt und um ein mechanisch ausreichend stabiles Xerogel zu erhalten, ergibt sich jedoch eine praktische untere Grenze des volumengewichteten mittleren Porendurchmessers. Im Allgemeinen beträgt der volumengewichtete mittlere Porendurchmesser mindestens 200 nm, vorzugsweise mindestens 400 nm. In vielen Fällen beträgt der volumengewichtete mittlere Porendurchmesser mindestens 500 nm, insbesondere mindestens 1 Mikrometer.

Bevorzugt weist das erfindungsgemäße Xerogel eine Porosität von mindestens 70 Vol.-%, insbesondere von 70 bis 99 Vol.-%, besonders bevorzugt mindestens 80 Vol.-% auf, ganz besonders bevorzugt mindestens 85 Vol.-%, insbesondere von 85 bis 95 Vol.-%. Die Porosität in Vol.-% bedeutet, dass der genannte Anteil des Gesamtvolumens des Xerogels aus Poren besteht. Zwar ist aus Sicht einer minimalen Wärmeleitfähigkeit meist eine möglichst hohe Porosität erwünscht, doch ist die Porosität durch die mechanischen Eigenschaften und die Verarbeitbarkeit des Xerogels nach oben begrenzt.

Erfindungsgemäß liegen die Monomerkomponenten (a1) und (a2), im Folgenden Komponenten (a1) und (a2) genannt, im Xerogel in polymerer Form vor. Aufgrund der erfindungsgemäßen Zusammensetzung liegen die Komponenten (a1) und (a2) im Xerogel überwiegend über Harnstoffverknüpfungen gebunden vor. Eine weitere mögliche Verknüpfung im Xerogel sind Isocyanurat-Verknüpfungen, die durch Trimerisation von Isocyanatgruppen der Komponente (a1) entstehen. Sofern das Xerogel weitere Monomerkomponenten enthält, sind weitere mögliche Verknüpfungen beispielsweise Urethangruppen, welche durch Reaktion von Isocyanatgruppen mit Alkoholen oder Phenolen entstehen.

Bevorzugt liegen die Komponenten (a1) und (a2) im Xerogel zu mindestens 50 mol-% durch Harnstoffgruppen -NH-CO-NH- verknüpft vor. Vorzugsweise liegen die Komponenten (a1) und (a2) im Xerogel von 50 bis 100 mol-% durch Harnstoffgruppen verknüpft vor, insbesondere von 60 bis 100 mol-%, ganz besonders bevorzugt von 70 bis 100 mol-%, insbesondere 80 bis 100 mol-%, beispielsweise von 90 bis 100 mol-%.

Die zu 100 mol-% fehlenden mol-% liegen als weitere Verknüpfungen vor, insbesondere als Isocyanurat-Verknüpfungen. Die weiteren Verknüpfungen können jedoch auch in Form anderer, dem Fachmann bekannter Verknüpfungen von Isocyanat-Polymeren vorliegen. Beispielhaft genannt seien Ester-, Harnstoff-, Biuret-, Allophanat-, Carbodiimid-, Isocyanurat-, Uretdion- und/oder Urethangruppen.

Die Bestimmung der mol-% der Verknüpfungen der Monomerkomponenten im Xerogel erfolgt mittels NMR-Spektroskopie (Kernspinresonanz) im Festkörper oder in gequollenem Zustand. Geeignete Bestimmungsmethoden sind dem Fachmann bekannt.

Das Einsatz-Verhältnis (Äquivalenzverhältnis) von NCO-Gruppen der Monomerkomponenten (a1) zu Aminogruppen der Monomerkomponente (a2) beträgt bevorzugt von 0,9 zu 1 bis 1,3 zu 1. Besonders bevorzugt beträgt das Äquivalenzverhältnis von NCO-Gruppen der Monomerkomponente (a1) zu Aminogruppen der Monomerkomponente (a2) von 0,95 zu 1 bis 1,2 zu 1, insbesondere von 1 zu 1 bis 1,1 zu 1.

Erfindungsgemäß enthält das Xerogel von 40 bis 80 Gew.-% mindestens eines mehrfunktionellen Isocyanates in polymerer Form. Als mehrfunktionelle Isocyanate kommen aromatische, aliphatische, cycloaliphatische und/oder araliphatische Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente (a1) in diesem Fall verschiedene mehrfunktionelle Isocyanate enthält. Als Bestandteil der Komponente (a1) in Betracht kommende mehrfunktionelle Isocyanate weisen zwei (im folgenden Diisocyanate genannt) oder mehr als zwei Isocyanatgruppen pro Molekül der Monomerkomponente auf.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylendiisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-isocyanatomethyl-cyclohexan (isophoron-diisocyanat, IPDI), 1,4- und/oder 1,3-Bis(isocyanatomethyl)cyclohexan (HXDI), 1,4-Cyclohexandiisocyanat, 1-Methyl-2,4-und/oder -2,6-cyclohexandiisocyanat und/oder 4,4'-, 2,4'- und 2,2'-Dicyclohexylmethandiisocyanat.

Als mehrfunktionelle Isocyanate der Komponente (a1) sind aromatische Isocyanate bevorzugt. Besonders bevorzugt sind als mehrfunktionelle Isocyanate der Komponente (a1) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als mehrfunktionelles Isocyanat besonders bevorzugt ist oligomeres Diphenylmethandiisocyanat. Bei oligomerem Diphenylmethandiisocyanat (im folgenden oligomeres MDI genannt) handelt es sich um ein oder ein Gemisch aus mehreren oligomeren Kondensationsprodukten und somit Derivaten von Diphenylmethandiisocyanat (MDI). Die mehrfunktionellen Isocyanate können bevorzugt auch aus Mischungen von monomeren aromatischen Diisocyanaten und oligomerem MDI aufgebaut sein.

Oligomeres MDI enthält ein oder mehrere mehrkernige Kondensationsprodukte des MDI mit einer Funktionalität von mehr als 2, insbesondere 3 oder 4 oder 5. Oligomeres MDI ist bekannt und wird häufig als Polyphenylpolymethylenlsocyanat bezeichnet. Oligomeres MDI ist üblicherweise aus einer Mischung aus MDI-basierten Isocyanaten mit unterschiedlicher Funktionalität aufgebaut. Üblicherweise wird oligomeres MDI im Gemisch mit monomerem MDI eingesetzt.

Die (mittlere) Funktionalität eines Isocyanates, welches oligomeres MDI enthält, kann im Bereich von ungefähr 2,3 bis ungefähr 5 variieren, insbesondere von 2,5 bis 3,5, insbesondere von 2,5 bis 3. Eine solche Mischung von MDI-basierten mehrfunktionellen Isocyanaten mit unterschiedlichen Funktionalitäten ist insbesondere das Roh-MDI, das bei der Herstellung von MDI anfällt.

Mehrfunktionelle Isocyanate oder Mischungen mehrerer mehrfunktioneller Isocyanate auf Basis von MDI sind bekannt und werden beispielsweise von Elastogran GmbH unter dem Namen Lupranat® vertrieben.

Vorzugsweise beträgt die Funktionalität der Komponente (a1) mindestens zwei, insbesondere mindestens 2,2 und besonders bevorzugt mindestens 2,5. Die Funktionalität der Komponente (a1) beträgt bevorzugt von 2,5 bis 4 und besonders bevorzugt von 2,5 bis 3.

Vorzugsweise beträgt der Gehalt an Isocyanatgruppen der Komponente (a1) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer besonders bevorzugten Ausführungsform besteht die Monomerkomponente (a1) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat.

Im Rahmen dieser besonders bevorzugten Ausführungsform enthält die Komponente (a1) ganz besonders bevorzugt oligomeres Diphenylmethandiisocyanat und weist eine Funktionalität von mindestens 2,5 auf.

Erfindungsgemäß besteht die Monomerkomponente (a2) aus mindestens einem mehrfunktionellen aromatischen Amin, wovon mindestens eines ausgewählt ist aus 4,4'-Diaminodiphenylmethan, 2,4'-Diaminodiphenylmethan, 2,2'-Diaminodiphenylmethan und oligomerem Diaminodiphenylmethan.

Sofern als Monomerkomponente (a2) 4,4'-Diaminodiphenylmethan, 2,4'-Diaminodiphenylmethan, 2,2'-Diaminodiphenylmethan und/oder oligomeres Diaminodiphenylmethan in Mischung mit einem weiteren mehrfunktionellen aromatischen Amin eingesetzt wird, dann kommen als weitere mehrfunktionelle aromatische Amine vorzugsweise Toluoldiamin, insbesondere Toluol-2,4-diamin und/oder Toluol-2,6-diamin und Diethyltoluoldiamin, insbesondere 3,5-Diethyltoluol-2,4-diamin und/oder 3,5-Diethyltoluol-2,6-diamin, in Betracht.

Vorzugsweise besteht die Monomerkomponente (a2) aus mindestens einem mehrfunktionellen aromatischen Amin ausgewählt aus 4,4'-Diaminodiphenylmethan, 2,4'- Diaminodiphenylmethan, 2,2'- Diaminodiphenylmethan und oligomerem Diaminodiphenylmethan.

Oligomeres Diaminodiphenylmethan enthält ein oder mehrere mehrkernige Methylenverbrückte Kondensationsprodukte von Anilin und Formaldehyd. Oligomeres MDA enthält mindestens ein, im Allgemeinen jedoch mehrere Oligomere des MDA mit einer Funktionalität von mehr als 2, insbesondere 3 oder 4 oder 5. Oligomeres MDA ist bekannt oder kann nach an sich bekannten Methoden hergestellt werden. Üblicherweise wird oligomeres MDA in Form von Mischungen mit monomerem MDA eingesetzt.

Die (mittlere) Funktionalität eines mehrfunktionellen Amins, welches oligomeres MDA enthält, kann im Bereich von ungefähr 2,3 bis ungefähr 5 variieren, insbesondere von 2,5 bis 3,5 und insbesondere von 2,5 bis 3. Eine solche Mischung von MDA-basierten mehrfunktionellen Aminen mit unterschiedlichen Funktionalitäten ist insbesondere das Roh-MDA, das insbesondere bei der Kondensation von Anilin mit Formaldehyd, üblicherweise katalysiert durch Salzsäure, als Zwischenprodukt der Herstellung von Roh-MDI entsteht. Bevorzugt enthält die Monomerkomponente (a2) oligomeres Diaminodiphenylmethan und weist eine Funktionalität von mindestens 2,5 auf.

### Verfahren zur Herstellung von Xerogelen

Das erfindungsgemäße Verfahren umfasst folgende Schritte:
(a) Bereitstellen einer Gelvorstufe (A) enthaltend die Monomerkomponenten (a1) und (a2) in einem Lösungsmittel (C);
(b) Umsetzung der Gelvorstufe (A) in Gegenwart des Lösungsmittels (C) zu einem Gel;
(d) Trocknen des im vorigen Schritt erhaltenen Gels durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit.

In einer bevorzugten Ausführungsform werden die Monomerkomponenten (a1) und (a2) zunächst getrennt voneinander jeweils in einem Lösungsmittel (C) bereitgestellt und schließlich zu Beginn von Schritt (b) vereinigt. Das erfindungsgemäße Verfahren umfasst demzufolge vorzugsweise folgende Schritte:
(a-1) Bereitstellen der Monomerkomponenten (a1) und (a2) getrennt voneinander jeweils in einem Lösungsmittel (C);
(a-2) Bereitstellen einer Gelvorstufe (A) enthaltend die Monomerkomponenten (a1) und (a2) in einem Lösungsmittel (C) durch Vereinigung der in Schritt (a-1) bereitgestellten Monomerkomponenten;
(b) Umsetzung der Gelvorstufe (A) in Gegenwart des Lösungsmittels (C) zu einem Gel;
(d) Trocknen des im vorigen Schritt erhaltenen Gels durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit.

Bevorzugt umfasst das erfindungsgemäße Verfahren weiterhin folgenden Schritt, wobei die Schritte in der Reihenfolge a-b-c-d durchgeführt werden:
(c) Modifizierung des erhaltenen Gels mittels mindestens einer organischen Verbindung (D), welche weder in Schritt (a) noch in Schritt (b) zugegen war.

### Schritt (a)

Erfindungsgemäß erfolgt in Schritt (a) das Bereitstellen einer Gelvorstufe (A) enthaltend die Monomerkomponenten (a1) und (a2) in einem Lösungsmittel (C). Die Gelvorstufe (A) enthält somit die weiter oben unter Xerogel beschriebenen Monomerkomponenten (a1) und (a2) in den ebenfalls weiter oben beschriebenen Mengenanteilen.

Die Monomerkomponenten (a1) und (a2) liegen in der Gelvorstufe (A) in monomerer Form vor oder wurden vorab durch teilweise oder nicht-äquimolare Umsetzung von Isocyanat- und Aminogruppen in ein Präpolymer umgewandelt, das gegebenenfalls mit weiteren Monomerkomponenten (a1) oder (a2) die Gelvorstufe (A) bildet. Die Gelvorstufe (A) ist somit gelierbar, das heißt sie kann durch Vernetzung in ein Gel umgesetzt werden. Die Mengenanteile der Monomerkomponenten (a1) und (a2) im Xerogel, worin sie in polymerer Form vorliegen, entsprechen den Mengenanteilen der Monomerkomponenten (a1) und (a2) in der Gelvorstufe (A), worin sie in noch nicht umgesetzter monomerer Form vorliegen.

Die Viskosität der eingesetzten Komponente (a1) kann in einem weiten Bereich variieren. Vorzugsweise weist die in Schritt (a) des erfindungsgemäßen Verfahrens eingesetzte Komponente (a1) eine Viskosität von 100 bis 3000 mPa.s, besonders bevorzugt von 200 bis 2500 mPa.s, auf.

Der Begriff Gelvorstufe (A) kennzeichnet die gelierbare Mischung aus den Komponenten (a1) und (a2). Die Gelvorstufe (A) wird anschließend in Schritt (b) in Gegenwart des Lösungsmittels (C) zu einem Gel, ein vernetztes Polymer, umgesetzt.

In Schritt (a) des erfindungsgemäßen Verfahrens stellt man somit eine Mischung enthaltend die Gelvorstufe (A) in einem flüssigen Verdünnungsmittel bereit. Der Begriff Lösungsmittel (C) umfasst im Rahmen der vorliegenden Erfindung flüssige Verdünnungsmittel, das heißt sowohl Lösungsmittel im engeren Sinne als auch Dispersionsmittel. Die Mischung kann insbesondere eine echte Lösung, eine kolloidale Lösung oder eine Dispersion, z.B. eine Emulsion oder Suspension, sein. Bevorzugt ist die Mischung eine echte Lösung. Das Lösungsmittel (C) ist eine unter den Bedingungen des Schrittes (a) flüssige Verbindung, vorzugsweise ein organisches Lösungsmittel.

Es ist dem Fachmann bekannt, dass aromatische Amine, insbesondere Diamine, entstehen, wenn man aromatische Isocyanate, insbesondere Diisocyanate, mit Wasser umsetzt. Demzufolge ist es möglich, an Stelle von mehrfunktionellen aromatischen Aminen entsprechende aromatische mehrfunktionelle Isocyanate und eine äquivalente Menge an Wasser als Komponente (a2) einzusetzen, so dass die gewünschte Menge an mehrfunktionellem aromatischem Amin in situ oder in einer Vorabumsetzung entsteht. Bei einem Überschuss der Komponente (a1) und gleichzeitiger Zugabe von Wasser kann die Komponente (a1) in situ anteilmäßig zur Komponente (a2) umgesetzt werden, welche dann unmittelbar mit der verbleibenden Komponente (a1) unter Bildung von Harnstoff-Verknüpfungen reagiert.

Bevorzugt wird das mehrfunktionelle Amin jedoch nicht im Lösungsmittel (C) in Gegenwart der Monomerkomponente (a1) aus der Komponente (a2) erzeugt, sondern wird separat als Komponente (a2) zugegeben. Demzufolge enthält die in Schritt (a) bereitgestellte Mischung bevorzugt kein Wasser.

Als Lösungsmittel (C) kommen prinzipiell eine oder ein Gemisch aus mehreren Verbindungen in Betracht, wobei das Lösungsmittel (C) bei den Temperatur- und Druckbedingungen, unter denen die Mischung in Schritt (a) bereitgestellt wird (kurz: Lösungsbedingungen), flüssig ist. Die Zusammensetzung des Lösungsmittels (C) wird so gewählt, dass es in der Lage ist, die organische Gelvorstufe zu lösen oder zu dispergieren, bevorzugt zu lösen. Bevorzugte Lösungsmittel (C) sind solche, die ein Lösungsmittel für die organische Gelvorstufe (A) sind, d. h. solche, die die organische Gelvorstufe (A) unter Reaktionsbedingungen vollständig lösen.

Das Reaktionsprodukt aus Schritt (b) ist ein Gel, d. h. ein viskoelastisches chemisches Netzwerk, das durch das Lösungsmittel (C) gequollen ist. Ein Lösungsmittel (C), welches ein gutes Quellmittel für das in Schritt (b) gebildete Netzwerk darstellt, führt in der Regel zu einem Netzwerk mit feinen Poren und kleinem mittleren Porendurchmesser, wohingegen ein Lösungsmittel (C), welches ein schlechtes Quellmittel für das aus Schritt (b) resultierende Gel darstellt, in der Regel zu einem grobporigen Netzwerk mit großem mittleren Porendurchmesser führt.

Die Wahl des Lösungsmittels (C) beeinflusst somit die angestrebte Porengrößenverteilung und die angestrebte Porosität. Die Wahl des Lösungsmittels (C) erfolgt im Allgemeinen zudem so, dass ein Ausfällen oder Ausflocken durch Bildung eines präzipitierten Reaktionsproduktes während oder nach Schritt (b) des erfindungsgemäßen Verfahrens weitestgehend nicht auftritt.

Bei Wahl eines geeigneten Lösungsmittels (C) ist der Anteil an präzipitiertem Reaktionsprodukt üblicherweise kleiner als 1 Gew.-%, bezogen auf das Gesamtgewicht der Mischung. Die Menge an gebildetem präzipitiertem Produkt in einem bestimmten Lösungsmittel (C) kann gravimetrisch bestimmt werden, indem die Reaktionsmischung vor dem Gelpunkt über ein geeignetes Filter filtriert wird.

Als Lösungsmittel (C) kommen die aus dem Stand der Technik bekannten Lösungsmittel für Isocyanat-basierte Polymere in Frage. Bevorzugte Lösungsmittel sind dabei solche, die ein Lösungsmittel für beide Komponenten, (a1) und (a2) sind, d. h. solche, die die Komponenten (a1) und (a2) unter Reaktionsbedingungen weitgehend vollständig lösen, so dass der Gehalt der organischen Gelvorstufe (A) in der gesamten in Schritt (a) bereitgestellten Mischung einschließlich des Lösungsmittels (C) bevorzugt mindestens 5 Gew.-% beträgt. Bevorzugt ist das Lösungsmittel (C) gegenüber Komponente (a1) inert, d. h. nicht reaktiv.

Als Lösungsmittel (C) kommen beispielsweise Dialkylether, zyklische Ether, Ketone, Alkylalkanoate, Amide wie Formamid und N-Methylpyrollidon, Sulfoxide wie Dimethylsulfoxid, aliphatische und cycloaliphatische halogenierte Kohlenwasserstoffe, halogenierte aromatische Verbindungen und fluorhaltige Ether in Betracht. Ebenso in Betracht kommen Mischungen aus zwei oder mehreren der vorgenannten Verbindungen.

Weiterhin kommen Acetale, insbesondere Diethoxymethan, Dimethoxymethan und 1,3-Dioxolan, als Lösungsmittel (C) in Betracht.

Dialkylether und zyklische Ether sind als Lösungsmittel (C) bevorzugt. Bevorzugte Dialkylether sind insbesondere solche mit 2 bis 6 Kohlenstoffatomen, insbesondere Methyl-Ethylether, Diethylether, Methyl-Propylether, Methyl- Isopropylether, Propyl-Ethylether, Ethyl-Isopropylether, Dipropylether, Propyl-Isopropylether, Diisopropylether, Methyl-Butylether, Methyl-Isobutylether, Methyl-t-Butylether, Ethyl-n-Butylether, Ethyl-Isobutylether und Ethyl-t-Butylether. Bevorzugte zyklische Ether sind insbesondere Tetrahydrofuran, Dioxan und Tetrahydropyran.

Ketone mit Alkylgruppen mit bis zu 3 Kohlenstoffatomen pro Substituent sind als Lösungsmittel (C) ebenfalls bevorzugt. Besonders bevorzugt sind als Lösungsmittel (C) folgende Ketone: Aceton, Cyclohexanon, Methyl-t-Butylketon und Methyl-Ethylketon..

Als Lösungsmittel (C) sind außerdem Alkylalkanoate bevorzugt, insbesondere Methylformiat, Methylacetat, Ethylformiat, Butylacetat und Ethylacetat. Bevorzugte halogenierte Lösungsmittel sind in der WO 00/24799, Seite 4, Zeile 12 bis Seite 5, Zeile 4 beschrieben.

Dialkylether, zyklische Ether, Ketone und Ester sind als Lösungsmittel (C) ganz besonders bevorzugt.

In vielen Fällen ergeben sich besonders geeignete Lösungsmittel (C), indem man zwei oder mehrere miteinander vollständig mischbare Verbindungen, ausgewählt aus den vorgenannten Lösungsmitteln, in Form eines Gemisches einsetzt.

Um in Schritt (b) ein ausreichend stabiles Gel zu erhalten, das bei der Trocknung in Schritt (d) nicht stark schrumpft, darf der Anteil der Gelvorstufe (A) an der gesamten, in Schritt (a) des erfindungsgemäßen Verfahrens bereitgestellten Mischung im Allgemeinen nicht weniger als 5 Gew.-% betragen. Bevorzugt beträgt der Anteil der Gelvorstufe (A) an der gesamten, in Schritt (a) des erfindungsgemäßen Verfahrens bereitgestellten Mischung einschließlich des Lösungsmittels (C) mindestens 8 Gew.-%, besonders bevorzugt mindestens 10 Gew.-%, insbesondere mindestens 12 Gew.-%.

Andererseits darf die Konzentration der Monomerkomponenten in der bereitgestellten Mischung nicht zu hoch gewählt werden, da ansonsten kein Xerogel mit günstigen Eigenschaften erhalten wird. Im allgemeinen beträgt der Anteil der Gelvorstufe (A) an der gesamten, in Schritt (a) des erfindungsgemäßen Verfahrens bereitgestellten Mischung höchstens 40 Gew.-%. Bevorzugt beträgt der Anteil der Gelvorstufe (A) an der gesamten, in Schritt (a) des erfindungsgemäßen Verfahrens bereitgestellten Mischung einschließlich des Lösungsmittels (C) höchstens 30 Gew.-%, besonders bevorzugt höchstens 20 Gew.-%, insbesondere höchstens 15 Gew.-%.

Optional enthält die in Schritt (a) bereitgestellte Mischung als weitere Komponente (B) noch mindestens einen Katalysator (b1). Vorzugsweise wird die Umsetzung der Gelvorstufe (A) jedoch ohne Anwesenheit eines Katalysators durchgeführt.

Sofern ein Katalysator (b1) eingesetzt wird, werden üblicherweise Trimerisationskatalysatoren verwendet, welche die Bildung von Isocyanuraten katalysieren. Als solche Trimerisationskatalysatoren können zum Beispiel dem Fachmann weitläufig bekannte, zum Beispiel die im folgenden ausgeführten, verwendet werden.

Sofern Trimerisationskatalysatoren als Komponente (b1) eingesetzt werden, sind bekannte Katalysatoren wie quaternäre Ammoniumhydroxide, Alkalimetall- und Erdalkalimetallhydroxide, -alkoxide und -carboxylate, z.B. Kaliumacetat und Kalium-2-ethyl-hexanoat, bestimmte tertiäre Amine und nicht-basische Metallcarboxylate, z.B. Bleioktoat und Triazinderivate, insbesondere symmetrische Triazinderivate, geeignet. Triazinderivate sind als Trimerisationskatalysatoren besonders geeignet.

Die Komponenten (a1) und (a2) werden bevorzugt so eingesetzt, dass die Gelvorstufe (A) von 30 bis 90 Gew.-% der Komponente (a1) und von 10 bis 70 Gew.-% der Komponente (a2) enthält. Bevorzugt enthält die Gelvorstufe (A) von 40 bis 80 Gew.-% der Komponente (a1) und von 20 bis 60 Gew.-% der Komponente (a2). Besonders bevorzugt enthält die Gelvorstufe (A) von 50 bis 70 Gew.-% der Komponente (a1) und von 30 bis 50 Gew.-% der Komponente (a2).

Das Einsatzverhältnis (Äquivalenzverhältnis) der Komponenten (a1) und (a2) der organischen Gelvorstufe (A) wird gemäß einer bevorzugten Ausführungsform so gewählt, dass nach erfolgter Gelierung in Schritt (b) das Gel noch reaktive Gruppen aufweist, welche in Schritt (c) durch chemische Reaktion mit einer organischen Verbindung (D) umgesetzt werden können, die weder in Schritt (a) noch in Schritt (b) zugegen war. Beispielsweise kann die organische Gelvorstufe (A) reaktive Gruppen enthalten, die erst mit der Verbindung (D) reagieren. In einer besonders bevorzugten Ausführungsform reagiert die organische Verbindung (D) mit reaktiven Gruppen, die schon in der organischen Gelvorstufe (A) vorhanden waren und im Rahmen der Umsetzung zu einem Gel in Schritt (b) nicht vollständig umgesetzt wurden. Unter reaktiver Gruppe soll dabei eine funktionelle Gruppe oder eine reaktive Stelle in einem Molekül, beispielsweise eine Position in einem aromatischen Ring, verstanden werden, die gegenüber der Verbindung (D) reaktiv ist.

In einer Ausführungsform enthält die organische Gelvorstufe (A) die Komponenten (a1) und (a2) in einem nicht-stöchiometrischen Verhältnis der reaktiven funktionellen Gruppen, so dass zu Beginn des Schrittes (c) des erfindungsgemäßen Verfahrens die reaktiven funktionellen Gruppen einer der beiden Komponenten (a1) oder (a2) im molaren Überschuss relativ zu den reaktiven funktionellen Gruppen der jeweils anderen Komponente in nicht umgesetzter Form vorliegen.

Bevorzugt beträgt der molare Überschuss an reaktiven funktionellen Gruppen einer der beiden Komponenten (a1) oder (a2) zu Beginn von Schritt (c) des erfindungsgemäßen Verfahrens relativ zu den reaktiven funktionellen Gruppen der jeweils anderen Komponente mindestens 5 mol-%, zum Beispiel von 5 bis 15 mol-%, insbesondere von 6 bis 12 mol-%. Der Überschuss der reaktiven Gruppen in der jeweils einen Komponente wird nach oben durch praktische Erwägungen begrenzt, da sich in Schritt (b) des erfindungsgemäßen Verfahrens ein Gel bilden muss.

In einer besonders bevorzugten Ausführungsform wird Komponente (a1) im Verhältnis zu Komponente (a2) derart eingesetzt wird, dass der Überschuss an Isocyanatgruppen zu Beginn des Schrittes (c) des erfindungsgemäßen Verfahrens mindestens 5 mol-%, insbesondere von 5 bis 15 mol-%, ganz besonders bevorzugt von 6 bis 12 mol-%, beträgt.

In einer weiteren bevorzugten Ausführungsform wird Komponente (a1) im Verhältnis zu Komponente (a2) derart eingesetzt, dass der Überschuss an gegenüber Isocyanatgruppen reaktiven Gruppen der Komponente (a2) zu Beginn des Schrittes (c) des erfindungsgemäßen Verfahrens mindestens 5 mol-%, insbesondere von 5 bis 15 mol-%, ganz besonders bevorzugt von 6 bis 12 mol-%, beträgt.

Die in Schritt (a) bereitgestellte Mischung kann außerdem übliche, dem Fachmann bekannte Hilfsmittel als weitere Bestandteile (B) enthalten. Genannt seien beispielsweise oberflächenaktive Substanzen, Flammschutzmittel, Keimbildungsmittel, Oxidationsstabilisatoren, Gleit- und Entformungshilfen, Farbstoffe und Pigmente, Stabilisatoren, z.B. gegen Hydrolyse, Licht, Hitze oder Verfärbung, anorganische und/oder organische Füllstoffe, Verstärkungsmittel und Biozide.

Nähere Angaben über die oben genannten Hilfsmittel- und Zusatzstoffe sind der Fachliteratur zu entnehmen, z.B. aus Plastics Additive Handbook, 5th edition, H. Zweifel, ed, Hanser Publishers, München, 2001.

Das Bereitstellen der Mischung gemäß Schritt (a) des erfindungsgemäßen Verfahrens kann auf übliche Weise erfolgen. Bevorzugt wird dazu ein Rührer oder eine andere Mischvorrichtung eingesetzt, um eine gute Durchmischung zu erzielen. Die sonstigen Mischbedingungen sind in der Regel nicht kritisch, beispielsweise kann man bei 0 bis 100°C und 0,1 bis 10 bar (absolut), insbesondere z.B. bei Raumtemperatur und Atmosphärendruck, mischen.

Die in Schritt (a) bereitgestellte Mischung kann auch als Sol bezeichnet werden. Es soll dabei unter einem Sol sowohl eine kolloidale Lösung verstanden werden, in der die organische Gelvorstufe (A) feinstverteilt in einem Lösungsmittel als Dispersionsmedium dispergiert ist, oder um eine echte Lösung der organischen Gelvorstufe (A) in einem Lösungsmittel.

### Schritt (b)

Erfindungsgemäß erfolgt in Schritt (b) die Umsetzung der Gelvorstufe (A) in Gegenwart des Lösungsmittels (C) zu einem Gel. In Schritt (b) des erfindungsgemäßen Verfahrens wird somit die organische Gelvorstufe (A) in einer Gelierungsreaktion zu einem Gel umgesetzt. Bei der Gelierungsreaktion handelt es sich um eine Polyadditionsreaktion, insbesondere um eine Polyaddition von Isocyanatgruppen und Aminogruppen.

Unter einem Gel soll ein vernetztes System auf Basis eines Polymers verstanden werden, das in Kontakt mit einer Flüssigkeit (sog. Solvogel oder Lyogel, bzw. mit Wasser als Flüssigkeit: Aquagel oder Hydrogel) vorliegt. Dabei bildet die Polymerphase ein kontinuierliches räumliches Netzwerk.

Im Rahmen von Schritt (b) des erfindungsgemäßen Verfahrens entsteht das Gel üblicherweise durch Ruhenlassen, z.B. durch einfaches Stehenlassen des Behälters, Reaktionsgefäßes oder Reaktors, in dem sich die Mischung befindet (im folgenden Geliervorrichtung genannt). Bevorzugt wird während des Gelierens (Gelbildung) die Mischung nicht gerührt oder durchmischt, weil dies die Ausbildung des Gels behindern könnte. Es hat sich als vorteilhaft erwiesen, die Mischung während des Gelierens abzudecken bzw. die Geliervorrichtung zu verschließen.

Die Dauer des Gelierens variiert je nach Art und Menge der eingesetzten Komponenten und der Temperatur und kann mehrere Tage betragen. Üblicherweise beträgt sie von 1 Minute bis 10 Tage, bevorzugt weniger als 1 Tag, insbesondere von 5 Minuten bis 12 Stunden, besonders bevorzugt höchstens 1 Stunde, insbesondere von 5 Minuten bis 1 Stunde.

Die Gelierung kann dabei ohne Wärmezuführung bei einer Temperatur im Bereich der Raumtemperatur durchgeführt werden, insbesondere von 15 bis 25 °C, oder bei einer gegenüber der Raumtemperatur erhöhten Temperatur, die 20°C oder mehr beträgt, insbesondere von 25°C bis 80°C. Üblicherweise verkürzt eine höhere Gelierungstemperatur die Dauer der Gelierung. Eine höhere Gelierungstemperatur ist jedoch nicht in allen Fällen vorteilhaft, da eine erhöhte Gelierungstemperatur zu Gelen mit unzureichenden mechanischen Eigenschaften führen kann. Vorzugsweise wird die Gelierung bei einer Temperatur im Bereich der Raumtemperatur durchgeführt, insbesondere von 15°C bis 25°C.

Der Druck beim Gelieren kann in einem weiten Bereich variieren und ist im Allgemeinen nicht kritisch. Er kann beispielsweise von 0,1 bar bis 10 bar betragen, bevorzugt 0,5 bar bis 8 bar und insbesondere 0,9 bis 5 bar (jeweils absolut). Insbesondere kann man wässrige Mischungen bei Raumtemperatur und Atmosphärendruck gelieren lassen.

Während des Gelierens erstarrt die Mischung zu einem mehr oder weniger formbeständigen Gel. Daher kann man die Gelbildung in einfacher Weise daran erkennen, dass sich der Inhalt der Geliervorrichtung nicht mehr bewegt, wenn die Geliervorrichtung oder ein Behälter, mit dem eine Probe entnommen wurde, langsam schräggestellt wird. Außerdem ändern sich bei der Gelierung die akustischen Eigenschaften der Mischung: die gelierte Mischung ergibt beim Klopfen auf die äußere Wand der Geliervorrichtung einen anderen, brummenden Klang als die noch nicht gelierte Mischung (sog. Brummgel).

In einer bevorzugten Ausführungsform wird das bei der Gelierung in Schritt (b) erhaltene Gel vor der Durchführung von Schritt (c), beziehungsweise, sofern Schritt (c) nicht ausgeführt wird, vor der Durchführung von Schritt (d) noch einer sogenannten Alterung unterworfen, bei der sich die Ausbildung des Gels vervollständigt. Die Alterung erfolgt insbesondere dadurch, dass man das Gel einige Zeit einer höheren Temperatur aussetzt als bei der vorangegangenen Gelierung. Dazu kann man beispielsweise ein Temperierbad oder einen Wärmeschrank verwenden oder die Vorrichtung oder Umgebung, in der sich das Gel befindet, in geeigneter Weise erwärmen.

Die Temperatur bei der Alterung kann in einem weiten Bereich variieren und ist an sich nicht kritisch. Im Allgemeinen altert man bei Temperaturen von 30°C bis 150°C, bevorzugt von 40°C bis 100°C. Die Alterungs-Temperatur sollte im Bereich von 10°C bis 100°C, insbesondere von 20°C bis 80°C über der Gelierungstemperatur liegen. Wurde bei Raumtemperatur geliert, so kann man insbesondere bei Temperaturen von 40°C bis 80°C, bevorzugt bei etwa 60°C altern. Der Druck bei der Alterung ist unkritisch und beträgt üblicherweise von 0,9 bis 5 bar (absolut).

Die Dauer der Alterung ist abhängig von der Art des Gels und kann wenige Minuten dauern, aber auch lange Zeit in Anspruch nehmen. Die Dauer der Alterung kann beispielsweise bis zu 30 Tagen betragen. Üblicherweise beträgt die Dauer der Alterung von 10 Minuten bis 12 Stunden, bevorzugt von 20 Minuten bis 6 Stunden und besonders bevorzugt von 30 Minuten bis 5 Stunden.

Je nach Art und Zusammensetzung kann das Gel während der Alterung geringfügig schrumpfen und sich dabei von der Wandung der Geliervorrichtung ablösen. Vorteilhaft deckt man das Gel während der Alterung ab bzw. verschließt die Geliervorrichtung, in der sich das Gel befindet.

### Schritt (c)

In einer optionalen, bevorzugten Ausführungsform erfolgt in Schritt (c) des erfindungsgemäßen Verfahrens eine Modifizierung des in Schritt (b) erhaltenen Gels mittels mindestens einer organischen Verbindung (D), welche weder in Schritt (a) noch in Schritt (b) zugegen war.

Die organische Verbindung (D) kann sowohl ausschließlich aus Nichtmetallen aufgebaut sein als auch Halbmetalle oder Metalle enthalten. Die organischen Verbindungen (D) enthalten vorzugsweise jedoch keine Metalle und keine Halbmetalle wie Silicium. Bevorzugt enthält die organische Verbindung (D) reaktive funktionelle Gruppen, die gegenüber dem in Schritt (b) erhaltenen Gel reaktiv sind.

Die Modifizierung verringert bevorzugt die Verträglichkeit des erhaltenen Gels, insbesondere die Verträglichkeit der Porenoberfläche des Gels, mit dem Lösungsmittel (C). Die Verbindung (D) ist somit bevorzugt eine Verbindung, welche mit der Porenoberfläche des Gels aus Schritt (b) in Kontakt kommt und dort verbleibt, wobei die Verträglichkeit des erhaltenen Gels mit dem Lösungsmittel (C) verringert wird. Unter Verringerung der Verträglichkeit ist zu verstehen, dass die anziehende Wechselwirkung zwischen dem Gel und der mit dem Gel in Kontakt befindlichen flüssigen Phase verringert wird. Somit handelt es sich im Rahmen der vorliegenden Erfindung bei der Verträglichkeit um eine thermodynamische Verträglichkeit, wobei bei abnehmender Verträglichkeit eine zunehmende mikroskopische Trennung erfolgt, das heißt die Komponenten besitzen bei einer verringerten Verträglichkeit eine verringerte Tendenz, sich auf molekularer Ebene zu durchdringen, insbesondere in Form einer Quellung des Gels durch das Lösungsmittel (C). Unter Verträglichkeit von Gel und Lösungsmittel (C) ist die Stärke der physikalisch-chemischen Interaktion zwischen der Porenoberfläche des Gels und dem Lösungsmittel zu verstehen. Sie wird bestimmt durch physikalisch-chemische Wechselwirkungen wie zum Beispiel der Wechselwirkung zwischen apolaren Verbindungen beziehungsweise Dipol-Dipol-Wechselwirkungen oder Wasserstoffbrücken.

Als Verbindung (D) sind im Rahmen des erfindungsgemäßen Verfahrens grundsätzlich solche organischen Verbindungen bevorzugt, die gegenüber dem Lösungsmittel (C) nicht reaktiv sind. Gegenüber dem Lösungsmittel (C) nicht reaktiv bedeutet, dass die Verbindung (D) mit dem Lösungsmittel keine chemische Reaktion eingeht und insbesondere durch das Lösungsmittel (C) nicht hydrolysiert beziehungsweise nicht solvolysiert wird.

Unter Modifizierung des Gels soll jede Maßnahme verstanden werden, bei der die Porenoberfläche des Gels durch mindestens eine Verbindung (D) modifiziert wird. Bevorzugt erfolgt die Modifizierung durch eine chemische Umsetzung zwischen der Verbindung (D) und dem Gel (im folgenden chemische Modifizierung genannt), insbesondere im Bereich der Porenoberfläche des Gels. Grundsätzlich kann die Modifizierung auch durch physikalisch-chemische Wechselwirkungen erfolgen, die nicht durch eine chemische Umsetzung im eigentlichen Sinn zustande kommen, insbesondere durch Wasserstoffbrücken oder andere intermolekulare Wechselwirkungen, beispielsweise ionische Wechselwirkungen und Donor-Akzeptor-Wechselwirkungen, so dass hier keine chemische Modifizierung vorliegt. Die physikalisch-chemischen Wechselwirkungen müssen dabei zumindest so stark sein, dass die Verträglichkeit des so modifizierten Gels mit dem Lösungsmittel verändert wird. Bevorzugt erfolgt in Schritt (c) jedoch eine chemische Modifizierung des erhaltenen Gels.

Als Porenoberfläche wird dabei derjenige Bereich des Gels angesehen, der durch die Verbindung (D) zugänglich ist, das heißt, entweder an der Grenzfläche zwischen Gel und Flüssigkeit liegt oder durch die in den Poren des Gels enthaltene Flüssigkeit erreichbar ist, insbesondere durch Quellung.

Die Verträglichkeit wird im Rahmen dieser bevorzugten Ausführungsform bevorzugt bestimmt, indem man das Gel bis zum Zeitpunkt des Erreichens des Endpunktes der Quellung mit dem Lösungsmittel (C) in Kontakt bringt und das Quellvermögen bestimmt. Die Verringerung des Quellvermögens dient dabei zur Charakterisierung der Verringerung der Verträglichkeit des Gels mit dem Lösungsmittel (C). Die erfindungsgemäße Modifizierung des erhaltenen Gels mittels mindestens einer organischen Verbindung (D) in Schritt (c) des erfindungsgemäßen Verfahrens verringert bevorzugt das Quellvermögen des Gels im Lösungsmittel (C). Unter Verringerung des Quellvermögens (QV) ist QV = (Vₚₛ - V₀) / V₀ zu verstehen, wobei Vₚₛ das partielle spezifische Volumen des Polymers im Gel unter gequollenen Bedingungen und Vo das spezifische Volumen im ungequollenen Trockenzustand ist. Die spezifischen Volumina können beispielsweise durch Pyknometrie nach DIN 66137 bestimmt werden.

Durch die verringerte Verträglichkeit verstärkt sich die Phasenseparation von Polymer und Lösungsmittel. Hieraus resultiert im Allgemeinen ein vergrößertes Porenvolumen und eine erhöhte Porosität nach der Trocknung des modifizierten Gels im Vergleich zum nicht-modifizierten Gel.

Das Quellvermögen kann zum Vergleich der Verträglichkeit zwischen unter ansonsten identischen Bedingungen erhältlichen Gelen eingesetzt werden, um so den Einfluss der Modifizierung des Gels in Schritt (c) des erfindungsgemäßen Verfahrens zu bestimmen.

Die Modifizierung des Gels erfolgt bevorzugt durch Reaktion mit chemischen Gruppen im Bereich der Porenoberfläche des Gels (chemische Modifizierung). Bei einer chemischen Modifizierung des Gels kann gleichzeitig eine Vernetzung im Bereich der Porenoberfläche erfolgen, falls eine Verbindung (D) eingesetzt wird, die mehr als eine reaktive funktionelle Gruppe beinhaltet.

Sofern das erhaltene Gel noch reaktive Isocyanatgruppen enthält, kommen als Verbindung (D) bevorzugt Amine in Betracht, die gegenüber Isocyanaten reaktiv sind und durch deren Umsetzung mit dem Gel eine verringerte Verträglichkeit des resultierenden Gels mit dem Lösungsmittel resultiert. Hierbei kommen als Verbindung (D) vorzugsweise Amine in Betracht, die eine zum Lösungsmittel entgegengesetzte Polarität aufweisen und gegenüber Isocyanaten reaktiv sind.

Unter entgegengesetzter Polarität soll dabei eine entgegengesetzte Richtung der Polarität verstanden werden und kein absoluter Betrag. Durch die Modifizierung mit mindestens einer Verbindung (D) mit entgegengesetzter Polarität in Schritt (c) des erfindungsgemäßen Verfahrens wird die Verträglichkeit mit dem Lösungsmittel herabgesetzt. Entgegengesetzt bedeutet bei einem polaren Lösungsmittel (C) ein Isocyanat, das die Polarität der Porenoberfläche herabsetzt, und bei einem (weniger bevorzugten) unpolaren Lösungsmittel (C) ein Isocyanat, das die Polarität der Porenoberfläche erhöht. Bei einem moderat polaren Lösungsmittel gibt es zwei Möglichkeiten für entgegengesetzte Polarität, ein Isocyanat, das die Porenoberfläche polar modifiziert oder - was bevorzugt ist - ein Isocyanat, das durch Modifizierung die Porenoberfläche in ihrer Polarität soweit herabsetzt, dass die Verträglichkeit mit dem moderat polaren Lösungsmittel verringert wird.

Die Amine reagieren im Rahmen dieser bevorzugten Ausführungsform mit überschüssigen Isocyanatgruppen des Gels an der Porenoberfläche unter Bildung von Harnstoffgruppen. Hierdurch verringert sich bevorzugt die Verträglichkeit des Gels mit dem verwendeten Lösungsmittel (C).

Bevorzugte aromatische Amine als Verbindung (D) sind insbesondere Diphenylsulfone mit mindestens zwei Aminogruppen, insbesondere Diaminodiphenlysulfone (DADPS), als organische Verbindung (D) eingesetzt, wobei 4,4'-DADPS ganz besonders bevorzugt ist.

Sofern das erhaltene Gel noch reaktive Aminogruppen oder andere gegenüber Isocyanaten reaktive Gruppen enthält, kommen als Verbindung (D) insbesondere Verbindungen in Betracht, die gegenüber der Komponente (a2) reaktiv sind und durch deren Umsetzung mit dem Gel eine verringerte Verträglichkeit des resultierenden Gels mit dem Lösungsmittel (C) resultiert. Insbesondere können die gegenüber Komponente (a2) reaktiven Verbindungen (D) eine zum Lösungsmittel entgegengesetzte Polarität aufweisen.

Insbesondere kommen als Verbindung (D) im Rahmen dieser zweiten bevorzugten Ausführungsform die weiter oben diskutierten mehrfunktionellen Isocyanate (a1) in Betracht, wobei erfindungsgemäß die Verbindung (D) nicht Bestandteil der organischen Gelvorstufe (A) in den Schritten (a) und (b) des erfindungsgemäßen Verfahrens war und darüber hinaus bevorzugt die Porenoberfläche in ihrer Polarität entgegengesetzt modifiziert.

### Schritt (d)

Erfindungsgemäß wird in Schritt (d) das im vorigen Schritt erhaltene Gel durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit getrocknet.

Vorzugsweise erfolgt das Trocknen des erhaltenen Gels durch Überführung des Lösungsmittels (C) in den gasförmigen Zustand bei einer Temperatur und einem Druck unterhalb der kritischen Temperatur und des kritischen Drucks des Lösungsmittels (C). Demzufolge erfolgt vorzugsweise das Trocknen durch Entfernung des Lösungsmittels (C), das bei der Umsetzung zugegen war, ohne vorherigen Austausch gegen ein weiteres Lösungsmittel.

Folglich bringt man nach Schritt (c) beziehungsweise Schritt (b) und vor Schritt (d) das Gel bevorzugt nicht mit einer organischen Flüssigkeit in Kontakt, um das im Gel, insbesondere in den Poren des Gels, enthaltene Lösungsmittel (C), gegen diese organische Flüssigkeit auszutauschen. Dies gilt unabhängig davon, ob das Gel gealtert wird oder nicht. Indem ein Lösungsmitteltausch unterbleibt, lässt sich das Verfahren besonders einfach und kostengünstig durchführen. Sofern jedoch ein Lösungsmitteltausch durchgeführt wird, ist es bevorzugt, das Lösungsmittel (C) gegen ein unpolares Lösungsmittel auszutauschen, insbesondere gegen Kohlenwasserstoffe wie Pentan.

Für die Trocknung durch Überführung der im Gel enthaltenen Flüssigkeit, bevorzugt das Lösungsmittel (C), in den gasförmigen Zustand kommen grundsätzlich sowohl Verdunstung als auch Verdampfung, jedoch nicht die Sublimation, in Betracht. Das Trocknen durch Verdunstung oder Verdampfung schließt insbesondere das Trocknen unter Atmosphärendruck, das Trocknen im Vakuum, das Trocknen bei Raumtemperatur und das Trocknen bei erhöhter Temperatur, jedoch nicht das Gefriertrocknen, ein. Erfindungsgemäß trocknet man bei einem Druck und einer Temperatur, die unterhalb des kritischen Druckes und unterhalb der kritischen Temperatur der im Gel enthaltenen Flüssigkeit liegen. In Schritt (d) des erfindungsgemäßen Verfahrens trocknet man somit das lösungsmittelhaltige Gel, wobei als Verfahrensprodukt das organische Xerogel entsteht.

Zum Trocknen des Gels öffnet man üblicherweise die Geliervorrichtung und hält das Gel solange unter den genannten Druck- und Temperaturbedingungen, bis die flüssige Phase durch Übergang in den gasförmigen Zustand entfernt ist, d.h. man verdunstet beziehungsweise verdampft die flüssige Phase. Um das Verdunsten zu beschleunigen, ist es häufig vorteilhaft, das Gel aus dem Behälter zu entfernen. Auf diese Weise wird die Phasengrenzfläche Gel/Umgebungsluft, worüber die Verdunstung und/oder Verdampfung stattfindet, vergrößert. Beispielsweise kann man das Gel zum Trocknen auf eine ebene Unterlage oder ein Sieb geben. Als Trocknungsverfahren kommen außerdem die dem Fachmann geläufigen Trocknungsverfahren wie Konvektionstrocknung, Mikrowellentrocknung, Vakuumtrockenschränke oder Kombinationen dieser Verfahren in Betracht.

Man kann das Gel an der Luft, oder falls es sauerstoffempfindlich ist, auch an anderen Gasen wie Stickstoff oder Edelgasen trocknen, und dazu gegebenenfalls einen Trockenschrank oder andere geeignete Vorrichtungen verwenden, in denen sich der Druck, die Temperatur sowie der Lösungsmittelgehalt der Umgebung kontrollieren lässt.

Die beim Trocknen zu wählenden Temperatur- und Druckbedingungen hängen unter anderem von der Natur der im Gel vorhandenen Flüssigkeit ab. Erfindungsgemäß wird bei einem Druck getrocknet, der unter dem kritischen Druck pₖᵣᵢₜ der im Gel vorhanden Flüssigkeit, bevorzugt das Lösungsmittel (C) liegt, und bei einer Temperatur getrocknet, die unter der kritischen Temperatur Tₖᵣᵢₜ liegt. Man trocknet demnach unter subkritischen Bedingungen. Dabei bedeutet kritisch: beim kritischen Druck und der kritischen Temperatur ist die Dichte der flüssigen Phase gleich der Dichte der Gasphase (sog. kritische Dichte), und bei Temperaturen oberhalb Tₖᵣᵢₜ lässt sich die fluide Phase auch bei Anwendung höchster Drücke nicht mehr verflüssigen.

Setzt man als Lösungsmittel Aceton ein, so trocknet man bei Temperaturen von 0°C bis 150°C, bevorzugt 10°C bis 100°C und besonders bevorzugt 15°C bis 80°C, und bei Drücken von Hochvakuum, beispielsweise von 10⁻³ mbar, bis 5 bar, bevorzugt 1 mbar bis 3 bar und insbesondere 10 mbar bis ungefähr 1 bar (absolut). Beispielsweise kann man bei Atmosphärendruck und von 0°C bis 80°C, insbesondere bei Raumtemperatur, trocknen. Besonders bevorzugt trocknet man in Schritt (d) das Gel bei einem Druck von 0,5 bis 2 bar (absolut), und bei einer Temperatur von 0 bis 100°C.

Andere im Gel vorhandene Flüssigkeiten, insbesondere andere Lösungsmittel (C) als Aceton erfordern Anpassungen der Trocknungsbedingungen (Druck, Temperatur, Zeit), die der Fachmann durch einfache Versuche ermitteln kann.

Das Trocknen kann durch Anwendung eines Vakuums beschleunigt bzw. vervollständigt werden. Um die Trocknungswirkung weiter zu verbessern, kann man diese Vakuumtrocknung bei einer höheren Temperatur vornehmen als das Trocknen bei üblichem Druck. Beispielsweise kann man den Großteil des Lösungsmittels (C) zunächst bei Raumtemperatur und Atmosphärendruck innerhalb von 30 min bis 3 Stunden entfernen, und danach das Gel bei 40 bis 80°C unter einem Vakuum von 1 bis 100 mbar, insbesondere 5 bis 30 mbar, innerhalb von 10 min bis 6 Stunden trocknen. Selbstverständlich sind auch längere Trocknungszeiten möglich, beispielsweise von 1 bis 5 Tagen. Bevorzugt sind jedoch häufig Trocknungszeiten von unter 12 Stunden.

Statt einer solchen stufenweisen Trocknung kann man den Druck während des Trocknens auch kontinuierlich, beispielsweise linear oder exponentiell absenken, bzw. die Temperatur in solcher Weise erhöhen, d.h. gemäß eines Druck- bzw. Temperaturprogramms trocknen. Naturgemäß trocknet das Gel umso schneller, je geringer der Feuchtigkeitsgehalt der Luft ist. Gleiches gilt sinngemäß für andere flüssige Phasen als Wasser und andere Gase als Luft.

Die bevorzugten Trocknungsbedingungen hängen nicht nur vom Lösungsmittel, sondern auch von der Natur des Gels ab, insbesondere die Stabilität des Netzwerkes im Verhältnis zu den bei der Trocknung wirkenden Kapillarkräften.

Beim Trocknen in Stufe (d) wird die flüssige Phase in der Regel vollständig oder bis auf einen Restgehalt von 0,01 bis 1 Gew.-%, bezogen auf das erhaltene Xerogel, entfernt.

### Eigenschaften der Xerogele und Verwendung

Die mit dem erfindungsgemäßen Verfahren erhältlichen Xerogele weisen einen volumengemittelten mittleren Porendurchmesser von höchstens 5 µm auf. Bevorzugt beträgt der volumengemittelte mittlere Porendurchmesser der mit dem erfindungsgemäßen Verfahren erhältlichen Xerogele von 200 nm bis 5 µm.

Der besonders bevorzugte volumengewichtete mittlere Porendurchmesser der mit dem erfindungsgemäßen Verfahren erhältlichen Xerogele beträgt höchstens 5 µm, insbesondere höchstens 3,5 µm, ganz besonders bevorzugt höchstens 2,5 µm.

Zwar ist ein möglichst geringer mittlerer Porendurchmesser bei gleichzeitig hoher Porosität aus Sicht reduzierter Wärmeleitfähigkeit grundsätzlich erwünscht, doch ist der mittlere Porendurchmesser durch die sich verschlechternden mechanischen Eigenschaften des Xerogels, insbesondere dessen Stabilität und Verarbeitbarkeit, durch praktische Erwägungen nach unten begrenzt. Im Allgemeinen beträgt der volumengewichtete mittlere Porendurchmesser mindestens 200 nm, vorzugsweise mindestens 400 nm. In vielen Fällen beträgt der volumengewichtete mittlere Porendurchmesser mindestens 500 nm, insbesondere mindestens 1 Mikrometer.

Bevorzugt weisen die mit dem erfindungsgemäßen Verfahren erhältlichen Xerogele eine Porosität von mindestens 70 Vol.-%, insbesondere von 70 bis 99 Vol.-%, besonders bevorzugt mindestens 80 Vol.-% auf, ganz besonders bevorzugt mindestens 85 Vol.-%, insbesondere von 85 bis 95 Vol.-%. Die Porosität in Vol.-% bedeutet, dass der genannte Anteil des Gesamtvolumens des Xerogels aus Poren besteht. Zwar ist aus Sicht einer minimalen Wärmeleitfähigkeit meist eine möglichst hohe Porosität erwünscht, doch ist die Porosität durch die mechanischen Eigenschaften und die Verarbeitbarkeit des Xerogels nach oben begrenzt.

Die Dichte der gemäß des erfindungsgemäßen Verfahrens erhältlichen organischen Xerogele beträgt üblicherweise 20 bis 600 g/l, bevorzugt 50 bis 500 g/l und besonders bevorzugt 100 bis 400 g/l.

Das erfindungsgemäße Verfahren ergibt ein zusammenhängendes poröses Material und nicht nur ein Polymerpulver oder -partikel. Dabei wird die räumliche Form des resultierenden Xerogels durch die Form des Gels bestimmt, die wiederum durch die Form der Geliervorrichtung bestimmt wird. So ergibt beispielsweise ein zylindrischer Gelierbehälter üblicherweise ein annähernd zylinderförmiges Gel, dass dann zu einem Xerogel in Zylinderform getrocknet wird.

Die erfindungsgemäßen Xerogele und die durch das erfindungsgemäße Verfahren erhältlichen Xerogele weisen eine geringe Wärmeleitfähigkeit, eine hohe Porosität und eine geringe Dichte auf. Die Xerogele weisen erfindungsgemäß eine geringe mittlere Porengröße auf. Die Kombination der vorgenannten Eigenschaften erlaubt den Einsatz als Dämmstoff im Bereich der thermischen Isolation, insbesondere für Anwendungen im Vakuumbereich, wo eine möglichst geringe Dicke von Vakuumplatten bevorzugt ist, beispielsweise in Kühlgeraten oder in Gebäuden. So ist die Verwendung in Vakuumisolationspaneelen, insbesondere als Kernmaterial für Vakuumisolationspaneelen, bevorzugt. Bevorzugt ist außerdem die Verwendung der erfindungsgemäßen Xerogele als Dämmstoff.

Darüber hinaus werden durch die geringe thermische Leitfähigkeit der erfindungsgemäßen Xerogele Anwendungen bei Drücken von 1 bis 100 mbar und insbesondere von 10 mbar bis 100 mbar möglich. Das Eigenschaftsprofil der erfindungsgemäßen Xerogele eröffnet insbesondere Anwendungen, bei denen eine lange Lebensdauer der Vakuumpanele gewünscht wird und die auch bei einer Druckzunahme von ungefähr 2 mbar pro Jahr noch nach vielen Jahren, beispielsweise bei einem Druck von 100 mbar, eine niedrige Wärmeleitfähigkeit aufweisen. Die erfindungsgemäßen Xerogele und die durch das erfindungsgemäße Verfahren erhältlichen Xerogele weisen günstige thermische Eigenschaften einerseits und günstige Materialeigenschaften wie einfache Verarbeitbarkeit und hohe mechanische Stabilität, beispielsweise geringe Brüchigkeit, andererseits auf.

### Beispiele

Die Bestimmung des Porenvolumens in ml pro g Probe und der mittleren Porengröße der Materialien erfolgte mittels Quecksilber-Porosimetrie nach DIN 66133 (1993) bei Raumtemperatur. Die mittlere Porengröße ist im Rahmen dieser Erfindung gleichzusetzen mit dem mittleren Porendurchmesser. Die Bestimmung des volumengewichteten mittleren Porendurchmessers erfolgt dabei rechnerisch aus der nach oben genannter Norm bestimmten Porengrößenverteilung.

Die Porosität in der Einheit Vol.-% wurde gemäß der Formel P = (Vᵢ / (Vᵢ + Vₛ)) * 100 Vol.-% berechnet, wobei P die Porosität, Vᵢ das Hg-Intrusionsvolumen nach DIN 66133 in ml/g und Vₛ das spezifische Volumen in ml/g des Probenkörpers ist.

Die Dichte ρ des porösen Materials in der Einheit g/ml wurde gemäß der Formel ρ = 1 / (Vᵢ + Vₛ) berechnet. Als spezifisches Volumen für poröse Materialien auf Basis von Melamin und Formaldehyd wurde der Wert 1 / Vₛ = 1,68 g/ml und als spezifisches Volumen für poröse Materialien auf Basis von Isocyanat wurde der Wert 1 / Vₛ = 1,38 g/ml verwendet. Beide Werte wurden durch He-Pyknometrie bestimmt.

Die thermische Leitfähigkeit λ wurde mittels des dynamischen Hitzdraht-Verfahrens bestimmt. Beim Hitzdraht-Verfahren wird in die zu untersuchende Probe ein dünner Draht eingebettet, der gleichzeitig als Heizelement und Temperatursensor dient. Als Drahtmaterial wurde ein Platin-Draht mit einem Durchmesser von 100 Mikrometer und einer Länge von 40 mm eingesetzt, der zwischen zwei Hälften des jeweiligen Probenkörpers eingebettet wurde. Der Messaufbau aus Probe und Hitzdraht wurde in einen evakuierbaren Rezipienten präpariert, in dem nach dem Evakuieren der gewünschte Druck durch Belüften mit gasförmigem Stickstoff eingestellt wurde.

Während des Experiments wurde der Draht mit konstanter Leistung beheizt. Die Temperatur betrug 25°C. Die zeitliche Entwicklung des sich am Ort des Hitzdrahtes ergebenden Temperaturanstieges wurde durch Messung des Widerstandes erfasst. Die Wärmeleitfähigkeit wurde durch Anpassung einer analytischen Lösung unter Berücksichtigung eines thermischen Kontaktwiderstandes zwischen Probe und Draht sowie axialer Wärmeverluste an die zeitliche Temperaturentwicklung gemäß H.-P. Ebert et al., High Temp.-High. Press, 1993, 25, 391-401 bestimmt. Die Bestimmung des Gasdrucks erfolgte mit zwei kapazitiven Drucksensoren mit unterschiedlichen Messbereichen (0,1 bis 1000 mbra und 0,001 bis 10 mbar).

Beispiel 1:
a) 1,9 g oligomeres MDI (Lupranat® M200 R) mit einem NCO-Gehalt von 30,9 g pro 100 g nach ASTM D-5155-96 A, einer Funktionalität im Bereich von drei und einer Viskosität von 2100 mPa.s bei 25°C nach DIN 53018 wurden unter Rühren bei 20°C in 10,6 g Aceton in einem Becherglas gelöst. 1,26 g 4,4'-Diaminodiphenylmethan wurden in 10,9 g Aceton in einem zweiten Becherglas gelöst.
b) Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen.
d) Anschließend wurde das Gel aus dem Becherglas genommen und die Flüssigkeit (Aceton) durch 7 Tage langes Trocknen bei 20°C entfernt.

Das erhaltene Material hatte ein Porenvolumen von 5,1 ml/g und einen durchschnittlichen Porendurchmesser von 2,9 µm. Die Porosität betrug 87 Vol.-% mit einer entsprechenden Dichte von 170 g/l. Die thermische Leitfähigkeit λ des erhaltenen Materials ist aus Tabelle 1 ersichtlich.

**Tabelle 1: thermische Leitfähigkeit λ (Beispiel 1)**

| Druck [mbar] | λ [mW/m*K] |
|---|---|
| 1 | 6,5 |
| 2,1 | 7,8 |
| 3,1 | 8,9 |
| 7 | 12,2 |
| 14 | 14 |
| 41 | 20,1 |
| 71 | 26,3 |
| 100 | 28,8 |
| 299 | 34 |
| 701 | 36,7 |
| 1004 | 37,6 |

Beispiel 2:
a) 1,9 g oligomeres MDI (Lupranat® M200 R) mit einem NCO-Gehalt von 30,9 g pro 100 g nach ASTM D-5155-96 A, einer Funktionalität im Bereich von drei und einer Viskosität von 2100 mPa.s bei 25°C nach DIN 53018 wurden unter Rühren bei 20°C in 14 g Dioxan in einem Becherglas gelöst. 1,24 g 4,4'-Diaminodiphenylmethan wurden in 14,4 g Dioxan in einem zweiten Becherglas gelöst.
b) Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen.
d) Anschließend wurde das Gel aus dem Becherglas genommen und die Flüssigkeit (Dioxan) durch 7 Tage langes Trocknen bei 20°C entfernt.

Das erhaltene Material hatte ein Porenvolumen von 4,1 ml/g und einen durchschnittlichen Porendurchmesser von 2,5 µm. Die Porosität betrug 85 Vol.-% mit einer entsprechenden Dichte von 207 g/l. Das erhaltene Material wies eine thermische Leitfähigkeit λ von 5,7 mW/m*K bei einem Druck von 1,53 mbar auf.

Vergleichsbeispiel 3V:
a) 4,19 g oligomeres MDI (Lupranat® M20 S) mit einem NCO-Gehalt von 31,8 g pro 100 g nach ASTM D-5155-96 A, einer Viskosität von 220 mPa.s bei 25°C und einer Funktionalität von ungefähr 2,7 wurden unter Rühren bei 20°C in 50 g Aceton in einem Becherglas gelöst. 2,66 g Diethyltoluoldiamin (Ethacure® 100, eine Mischung aus 3,5-Diethyltoluol-2,4-diamin und 3,5-Diethyltoluol-2,6-diamin) wurde in 50 g Aceton in einem zweiten Becherglas gelöst.
b) Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen.
d) Anschließend wurde das Gel aus dem Becherglas genommen und die Flüssigkeit (Aceton) durch 7 Tage langes Trocknen bei 20°C entfernt.

Der in Schritt (b) erhaltene Gelkörper wies eine schmierige Konsistenz auf und zeigte eine geringe mechanische Stabilität. Das in d) erhaltene Produkt wies eine im Vergleich zu den Beispielen 1 und 2 deutlich geschrumpfte Form auf.

### Beispiel 4V

a) 1,56 g oligomeres MDI (Lupranat® M200 R) mit einem NCO-Gehalt von 30,9 g pro 100 g nach ASTM D-5155-96 A, einer Funktionalität im Bereich von drei und einer Viskositat von 2100 mPa.s bei 25°C nach DIN 53018 und 0,8 g Diethyltoluoldiamin (Ethacure® 100, eine Mischung aus 3,5-Diethyltoluol-2,4-diamin und 3,5-Diethyltoluol-2,6-diamin) wurden unter Rühren bei 20°C in 34 g Aceton in einem Becherglas gelöst.
b) Die Mischung wurde bei Raumtemperatur 24 Stunden zur Aushärtung stehen gelassen.
d) Anschließend wurde das Gel aus dem Becherglas genommen und die Flüssigkeit (Aceton) durch 7 Tage langes Trocknen bei 20°C entfernt.

Der in Schritt (b) erhaltene Gelkörper wies eine schmierige Konsistenz auf und zeigte eine geringe mechanische Stabilität. Das in d) erhaltene Produkt wies eine im Vergleich zu den Beispielen 1 und 2 deutlich geschrumpfte Form auf.

## Patentansprüche

1. Xerogel enthaltend
- von 30 bis 90 Gew.-% einer Monomerkomponente (a1) aus mindestens einem mehrfunktionellen Isocyanat und
- von 10 bis 70 Gew.-% einer Monomerkomponente (a2) aus mindestens einem mehrfunktionellen aromatischen Amin, wovon mindestens eines ausgewählt ist aus 4,4'-Diaminodiphenylmethan, 2,4'-Diaminodiphenylmethan, 2,2'-Diaminodiphenylmethan und oligomerem Diaminodiphenylmethan,
wobei die Summe der Gew.-% der Monomerkomponenten (a1) und (a2) 100 Gew.-% ergibt und wobei die Monomerkomponenten im Xerogel in polymerer Form vorliegen und der volumengewichtete mittlere Porendurchmesser des Xerogels höchstens 5 µm beträgt.

2. Xerogel nach Anspruch 1, enthaltend von 40 bis 80 Gew.-% der Monomerkomponente (a1) und von 20 bis 60 Gew.-% der Monomerkomponente (a2).

3. Xerogel nach Anspruch 1 oder 2, wobei Monomerkomponente (a2) aus mindestens einem mehrfunktionellen aromatischen Amin ausgewählt aus 4,4'-Diaminodiphenylmethan, 2,4'-Diaminodiphenylmethan, 2,2'-Diaminodiphenylmethan und oligomerem Diaminodiphenylmethan besteht.

4. Xerogel nach den Ansprüchen 1 bis 3, enthaltend von 50 bis 70 Gew.-% der Monomerkomponente (a1) und von 30 bis 50 Gew.-% der Monomerkomponente (a2).

5. Xerogel nach den Ansprüchen 1 bis 4, wobei die Monomerkomponente (a2) oligomeres Diaminodiphenylmethan enthält und eine Funktionalität von mindestens 2,5 aufweist.

6. Xerogel nach den Ansprüchen 1 bis 5, wobei die Monomerkomponente (a1) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat besteht.

7. Xerogel nach den Ansprüchen 1 bis 6, wobei Komponente (a1) oligomeres Diphenylmethandiisocyanat enthält und eine Funktionalität von mindestens 2,5 aufweist.

8. Xerogel nach den Ansprüchen 1 bis 7, wobei Komponente (a1) oligomeres Diphenylmethandiisocyanat und Komponente (a2) oligomeres Diaminodiphenylmethan enthält und die Summe aus der Funktionalität der Monomerkomponente (a1) und der Funktionalität der Monomerkomponente (a2) mindestens 5,5 beträgt.

9. Xerogel nach den Ansprüchen 1 bis 8, wobei der volumengewichtete mittlere Porendurchmesser des Xerogels höchstens 3 µm beträgt.

10. Verfahren zur Herstellung von Xerogelen gemäß den Ansprüchen 1 bis 9, umfassend
(a) Bereitstellen einer Gelvorstufe (A) enthaltend die Monomerkomponenten (a1) und (a2) wie in den Ansprüchen 1 bis 8 definiert in einem Lösungsmittel (C);
(b) Umsetzung der Gelvorstufe (A) in Gegenwart des Lösungsmittels (C) zu einem Gel;
(d) Trocknen des im vorigen Schritt erhaltenen Gels durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit.

11. Verfahren zur Herstellung von Xerogelen nach Anspruch 10, weiterhin umfassend
(c) Modifizierung des erhaltenen Gels mittels mindestens einer organischen Verbindung (D), welche weder in Schritt (a) noch in Schritt (b) zugegen war;
wobei die Schritte in der Reihenfolge a-b-c-d durchgeführt werden.

12. Verfahren nach den Ansprüchen 10 oder 11, wobei das Trocknen des erhaltenen Gels durch Überführung des Lösungsmittels (C) in den gasförmigen Zustand bei einer Temperatur und einem Druck unterhalb der kritischen Temperatur und des kritischen Drucks des Lösungsmittels (C) erfolgt.

13. Xerogel erhältlich gemäß den Ansprüchen 10 bis 12.

14. Verwendung von Xerogelen gemäß den Ansprüchen 1 bis 9 oder von Xerogelen gemäß Anspruch 13 als Dämmstoff.

15. Verwendung von Xerogelen gemäß den Ansprüchen 1 bis 9 oder von Xerogelen gemäß Anspruch 13 für Vakuumisolationspaneele.

## Claims

1. A xerogel comprising
- from 30 to 90% by weight of a monomer component (a1) composed of at least one polyfunctional isocyanate and
- from 10 to 70% by weight of a monomer component (a2) composed of at least one polyfunctional aromatic amine, at least one of which is selected from 4,4'-diaminodiphenylmethane, 2,4'-diaminodiphenylmethane, 2,2'-diaminodiphenylmethane and oligomeric diaminodiphenylmethane,
where the sum of the % by weight of monomer components (a1) and (a2) adds up to 100% by weight and where the monomer components are present in polymeric form in the xerogel and the volume-weighted mean pore diameter of the xerogel is at most 5 µm.

2. The xerogel according to claim 1, comprising from 40 to 80% by weight of monomer component (a1) and from 20 to 60% by weight of monomer component (a2).

3. The xerogel according to claim 1 or 2, wherein monomer component (a2) consists of at least one polyfunctional aromatic amine selected from 4,4'-diaminodiphenylmethane, 2,4'-diaminodiphenylmethane, 2,2'-diaminodiphenylmethane and oligomeric diaminodiphenylmethane.

4. The xerogel according to claims 1 to 3, comprising from 50 to 70% by weight of monomer component (a1) and from 30 to 50% by weight of monomer component (a2).

5. The xerogel according to claims 1 to 4, wherein monomer component (a2) comprises oligomeric diaminodiphenylmethane and has a functionality of at least 2.5.

6. The xerogel according to claims 1 to 5, wherein monomer component (a1) consists of at least one polyfunctional isocyanate selected from diphenylmethane 4,4'-diisocyanate, diphenylmethane 2,4'-diisocyanate, diphenylmethane 2,2'-diisocyanate and oligomeric diphenylmethane diisocyanate.

7. The xerogel according to claims 1 to 6, wherein component (a1) comprises oligomeric diphenylmethane diisocyanate and has a functionality of at least 2.5.

8. The xerogel according to claims 1 to 7, wherein component (a1) comprises oligomeric diphenylmethane diisocyanate and component (a2) comprises oligomeric diaminodiphenylmethane, and the sum of the functionality of monomer component (a1) and of the functionality of monomer component (a2) is at least 5.5.

9. The xerogel according to claims 1 to 8, wherein the volume-weighted mean pore diameter of the xerogel is at most 3 µm.

10. A process for preparing xerogels according to claims 1 to 9, comprising
(a) providing a gel precursor (A) comprising monomer components (a1) and (a2) as defined in claims 1 to 8 in a solvent (C);
(b) converting the gel precursor (A) in the presence of the solvent (C) to a gel;
(d) drying the gel obtained in the previous step by converting the liquid present in the gel to the gaseous state at a temperature and a pressure below the critical temperature and the critical pressure of the liquid present in the gel.

11. The process for preparing xerogels according to claim 10, further comprising
(c) modifying the resulting gel by means of at least one organic compound (D) which was present neither in step (a) nor in step (b);
where the steps are performed in the sequence a-b-c-d.

12. The process according to claims 10 and 11, wherein the resulting gel is dried by converting the solvent (C) to the gaseous state at a temperature and a pressure below the critical temperature and the critical pressure of the solvent (C).

13. A xerogel obtainable according to claims 10 to 12.

14. The use of xerogels according to claims 1 to 9 or of xerogels according to claim 13 as an insulating material.

15. The use of xerogels according to claims 1 to 9 or of xerogels according to claim 13 for vacuum insulation panels.

## Revendications

1. Xérogel, contenant
- de 30 à 90 % en poids d'un composant monomère (a1) constitué d'au moins un isocyanate polyfonctionnel et
- de 10 à 70 % en poids d'un composant monomère (a2) constitué d'au moins une amine aromatique polyfonctionnelle, au moins l'une d'entre elles étant choisie parmi le 4,4'-diaminodiphénylméthane, le 2,4'-diaminodiphénylméthane, le 2,2'-diaminodiphénylméthane et le diaminodiphénylméthane oligomère,
la somme des % en poids des composants monomères (a1) et (a2) étant de 100 % en poids et les composants monomères se trouvant sous forme polymérisée dans le xérogel et le diamètre de pore moyen en volume du xérogel étant d'au plus 5 µm.

2. Xérogel selon la revendication 1, contenant de 40 à 80 % en poids du composant monomère (a1) et de 20 à 60 % en poids du composant monomère (a2).

3. Xérogel selon la revendication 1 ou 2, dans lequel le composant monomère (a2) est constitué d'au moins une amine aromatique polyfonctionnelle choisie parmi le 4,4'-diaminodiphénylméthane, le 2,4'-diaminodiphénylméthane, le 2,2'-diaminodiphénylméthane et le diaminodiphénylméthane oligomère.

4. Xérogel selon les revendications 1 à 3, contenant de 50 à 70 % en poids du composant monomère (a1) et de 30 à 50 % en poids du composant monomère (a2).

5. Xérogel selon les revendications 1 à 4, dans lequel le composant monomère (a2) contient du diaminodiphénylméthane oligomère et présente une fonctionnalité d'au moins 2,5.

6. Xérogel selon les revendications 1 à 5, dans lequel le composant monomère (a1) est constitué d'au moins un isocyanate polyfonctionnel choisi parmi le 4,4'-diisocyanate de diphénylméthane, le 2,4'-diisocyanate de diphénylméthane, le 2,2'-diisocyanate de diphénylméthane et le diisocyanate de diphénylméthane oligomère.

7. Xérogel selon les revendications 1 à 6, dans lequel le composant (a1) contient du diisocyanate de diphénylméthane oligomère et présente une fonctionnalité d'au moins 2,5.

8. Xérogel selon les revendications 1 à 7, dans lequel le composant (a1) contient du diisocyanate de diphénylméthane oligomère et le composant (a2) du diaminodiphénylméthane oligomère, et la somme de la fonctionnalité du composant monomère (a1) et de la fonctionnalité du composant monomère (a2) est d'au moins 5,5.

9. Xérogel selon les revendications 1 à 8, dans lequel le diamètre de pore moyen en volume du xérogel est d'au plus 3 µm.

10. Procédé de fabrication de xérogels selon les revendications 1 à 9, comprenant
(a) la préparation d'un précurseur de gel (A) contenant les composants monomères (a1) et (a2) tels que définis dans les revendications 1 à 8 dans un solvant (C) ;
(b) la mise en réaction du précurseur de gel (A) en présence du solvant (C) pour former un gel ;
(d) le séchage du gel obtenu à l'-étape précédente par transfert du liquide contenu dans le gel à l'état gazeux à une température et à une pression inférieures à la température critique et la pression critique du liquide contenu dans le gel.

11. Procédé de fabrication de xérogels selon la revendication 10, comprenant également
(c) la modification du gel obtenu avec au moins un composé organique (D), qui n'a été ajouté ni à l'étape (a); ni à l'étape (b) ;
les étapes étant réalisées dans l'ordre a-b-c-d.

12. Procédé selon les revendications 10 ou 11, dans lequel le séchage du gel obtenu a lieu par transfert du solvant (C) à l'état gazeux à une température et à une pression inférieures à la température critique et la pression critique du solvant (C).

13. Xérogel pouvant être obtenu selon les revendications 10 à 12.

14. Utilisation de xérogels selon les revendications 1 à 9 ou de xérogels selon la revendication 13 en tant que matériau isolant.

15. Utilisation de xérogels selon les revendications 1 à 9 ou de xérogels selon la revendication 13 pour des panneaux d'isolation sous vide.
